# EUROPÄISCHE PATENTSCHRIFT

(11) **EP 1 328 737 B1**
(45) Veröffentlichungstag und Bekanntmachung des Hinweises auf die Patenterteilung: **11.04.2007**
(21) Anmeldenummer: 01969735.8
(22) Anmeldetag: 19.09.2001
(51) Int. Cl.: F16D 69/02, F16D 65/12, C04B 35/573, C04B 35/80

(54) **VERFAHREN ZUR HERSTELLUNG VON KERAMIKBREMSSCHEIBEN AUS BMC**
METHOD FOR PRODUCING CERAMIC BRAKE DISKS FROM BMC
PROCEDE POUR FABRIQUER DES DISQUES DE FREINS CERAMIQUES EN BMC

(30) Priorität: 29.09.2000 DE 10049748; 09.08.2001 DE 10139288
(43) Veröffentlichungstag der Anmeldung: 23.07.2003
(73) Patentinhaber: Menzolit Fibron GmbH, 75015 Bretten (DE)
(72) Erfinder: EHNERT, Gerd, 76694 Forst (DE)
(74) Vertreter: Scherzberg, Andreas Hans
(86) Internationale Anmeldenummer: PCT/EP2001/010800
(87) Internationale Veröffentlichungsnummer: WO 2002/027208

(56) Entgegenhaltungen:
- DE-C- 19 711 829

## Beschreibung

Die Erfindung betrifft ein Verfahren zur Herstellung von Keramikbremsscheiben.

Der Einsatz von kohlenstofffaserverstärkten Kohlenstoff (CFC-Werkstoffen) in Bremsscheiben ist wegen der Oxydationsanfälligkeit der Kohlenstofffasern auf etwa 500°C begrenzt. Eine Anwendung erfolgt z. B. bei Formel 1 Fahrzeugen. Eine exakte Abstimmung der CFC Scheibenqualität entsprechend den herrschenden Witterungsbedingungen ist erforderlich. Die Haltbarkeit erstreckt sich nur über ein Rennen. Für den Gebrauch in Serienfahrzeugen ist der Werkstoff nicht geeignet. Von Nachteil ist der hohe Preis, der hohe Verschleiß und der witterungs- und temperaturabhängige Reibungskoeffizient.

Mit kurzkohlenstofffaserverstärkten Keramikkörpern (Ceramic Matrix Composites (CMC)) lässt sich eine höhere Festigkeit bei hohen Temperaturen erreichen. Vielfach wird jedoch keine ausreichende Schadenstoleranz für Hochleistungsanwendungen erreicht, wie z.B. für Bremsscheiben gefordert. Die Herstellung eines solchen Materials mit Kurzfaserverstärkung erfolgt nach dem sogenannten Aufbaugranulationsverfahren, wie in DE 197 11 829 C1 beschrieben.

Es ist Stand der Technik, zur Erhöhung der Schadenstoleranz eine Langfaserverstärkung mit Kohlenstofffasergewebe einzubringen. Der Prozess ist sehr aufwendig und kostenintensiv bezüglich der Zuschnittsvorbereitung, Verschnittmenge und der Kohlenstofffaser-Halbzeugkosten.

Die Herstellung von Bremsscheiben aus Ceramic Advanced SMC mit Kurz- und Langfaserverstärkung nach PCT/EP00/00253 und DE 199 01 215 A1 ist eine kostengünstigere Alternative mit höherer Schadenstoleranz als die Verstärkung mit Kohlenstofffasergewebe. Die Zuschnittsvorbereitung für das Pressen der Bremsscheiben ist jedoch wegen des Aufwands immer noch zu kostenintensiv.

Für die Großserienherstellung von Bremsscheiben wird eine in die Zukunft gerichtete moderne und rationelle Verfahrenstechnik benötigt.

Es wird daher ein Verfahren zur Herstellung von Keramikbremsscheiben aus BMC vorgeschlagen, umfassend folgende Verfahrensschritte:
a) Herstellung eines BMC-Compound (2) mit einer Matrix aus Phenolharz und mit Verstärkungsfasern aus Kohlenstoff, wobei die Länge der Kohlenstofffasern zwischen 6 mm und 50 mm liegt,
b) Herstellung eines Grünlings der Keramikbremsscheiben aus dem BMC-Compound (2) im Spritzpress-oder im Spritzprägeverfahren,
c) Pyrolisieren des Grünlings zur Herstellung eines porösen Formkörpers und
d) Schmelzinfiltration des porösen Formkörpers mit einer Schmelze, vorzugsweise mit einer Siliziumschmelze, zur Herstellung eines Formkörpers mit reaktionsgebundenen Fasern.

BMC-Formmassen und deren Zusammensetzung sind z. B. beschrieben im Kunststoff-Handbuch, Wilbrand Woebcken, Ausgabe 10, Duroplaste, Hanser Verlag, 1988, S.312-323.

Merkmale der vorliegenden Erfindung:
- Herstellung eines BMC mit keramischer Matrix und Kohlenstofffaserverstärkung.
- Problemlose Fertigung größerer Stückzahlen. Im Vergleich zum SMC-Herstellprozess kann BMC in der CMC-Verfahrenstechnik (Continous Moulding Compound) in der für das Spritzgieß- oder Spritzpressverfahren geeigneten Halbzeugform rationell gefertigt werden. Diese Verfahrenstechniken sind rationeller, weniger kosten- und manpowerintensiv als die Verarbeitung von SMC im Pressverfahren. Größere Stückzahlen können problemlos gefertigt werden.
- Erzeugung der erforderlichen Faserstruktur für die Bremsscheibe bei der Verarbeitung des Compounds zu Bremsscheiben.

Erfindungsgemäß wird als Compound BMC mit einer Matrix aus Phenolharz und einer Kohlenstofffaserverstärkung verwendet. Die Verstärkungfaserlänge kann zwischen 6 mm und 50 mm liegen. Zur Optimierung der Keramikeigenschaften kann mit mehreren verschiedenen Faserlängen in einem Compound gearbeitet werden.

Die Herstellung des BMC erfolgt auf einer kontinuierlich arbeitenden Anlage (Continious Impregnated Compound). Das in dieser Verfahrenstechnik hergestellte Compound hat nur eine geringe Schädigung der Kohlenstofffaser und wird daher bevorzugt. Die Fertigung des keramischen BMC ist jedoch ebenfalls in den für die BMC-Herstellung üblichen Knetern möglich.

Die Verarbeitung des erfindungsgemäßen Ceramic Advanced BMC erfolgt im Spritzpress- oder im Spritzprägeverfahren. Die Vorteile dieser Verfahrenstechnik liegen in der rationelleren Verarbeitung mit weniger manuellem Aufwand, als im Pressverfahren mit SMC mit der aufwendigen Zuschnittserstettung. Zur Anpassung der Materialeigenschaften an die Anwendung für Bremsscheiben kann die Faserstruktur beim Einbringen des Compounds in das Formwerkzeug erzeugt werden. Durch die Verwendung der Mehrkomponenten-Spritzgießtechnik können mehrere Compounds mit verschiedenen Faserlängen gleichzeitig in das Werkzeug eingebracht und entsprechende Faserstrukturen erzeugt werden.

Bevorzugt kann das Sprüzpressverfahren eingesetzt werden. Das Spritzpressverfahren ist die Kombination der Presstechnik mit einem Einsprüzzylinder in der Mitte des Werkzeugs. Über einen zentralen Zylinder und Kolben, in dem die erforderliche Compoundmenge eingebracht wurde, wird die Formmasse in das geschlossene oder leicht geöffnete Werkzeug eingespritzt. Der Zylinder kann auch über eine Spritzgießmaschine oder einen Exdruder gefüllt werden.

Das Spritzprägeverfahren ist eine weitere Möglichkeit zur Herstellung der erfindungsgemäßen Bremsscheiben bzw. des Grünlings hierfür. Das Ceramic Advanced BMC wird auf einer Spritzgießmaschine, die in der Druck und Temperatureinstellung an die keramische Matrix angepasst wurde, in das geschlossene oder leicht geöffnete Werkzeug eingespritzt. Nach dem Einbringen der Compoundmenge in das beheizte Werkzeug wird das Werkzeug geschlossen und das Compound in der Form verteilt.

In vorteilhafter Ausgestaltung der Erfindung weisen die nach dem erfindungsgemä-ßen Verfahren hergestellten Formkörper, bzw. die Bremsscheiben Lüftungsrippen am Innendurchmesser auf beiden Seiten der Keramikbremsscheibe auf. Hierdurch ist die Kühlung durch Umgebungsluft verbessert.

Zusätzlich sind vorteilhafterweise auf beiden Seiten der Keramikbremsscheibe an deren Oberfläche durchgehende Lüftungskanäle in gerader, kreisförmiger oder evolvendenförmiger Anordnung zur Wärmeabführung angeordnet.

Zweckmäßigerweise liegt der Querschnitt der Lüftungskanäle in eckiger oder runder Form und Breiten zwischen 1 mm und 10 mm.

Die vorliegende Erfindung beschreibt im einzelnen:
- BMC mit keramischer Matrix und Kohlenstofffaserverstärkung für Keramikbremsscheiben
- Verstärkungsfaserlängen von 6 mm bis 50 mm
- Eine oder mehrere Faserlängen in einem Compound
- Faseranteile von 10 Vol % bis 60 Vol %
- Extrudieren des BMC zu zylindrisch geformten Portionen oder Extrudieren in Plastiksäcken zur einfachen Beschickung in Spritzgießmaschinen
- Verarbeitung des keramischen BMC auf Spritzgießmaschinen im Spritzprägeverfahren oder auf geeigneten Pressen im Spritzpressverfahren
- Erzeugung der Faseranordnung durch Quellströmung des keramischen BMC beim Einbringen der Formmasse in das Bremsscheibenwerkzeug bzw. die Presse.
- Erzeugung von Faserorientierungen in Umfangsrichtung der Keramikbremsscheibe.
- Durch Variation der Werkzeugöffnung beim Einbringen des keramischen BMC kann eine Beeinflussung der Faserorientierung in Umfangsrichtung erfolgen. Verzahnung und Ausrichtung in der zweiten und dritten Dimension erfolgen beim Schließen des Werkzeugs.
- Scheibendesign mit Lüftungsrippen am Innendurchmesser auf beiden Seiten der Keramikbremsscheibe.
- Durchgehende Lüftungskanäle in gerader, kreisförmiger oder evolvendenförmiger Anordnung auf beiden Seiten der Keramikbremsscheibe zur Wärmeabführung an der Bremsscheibenoberfläche.
- Querschnitt der Lüftungskanäle in eckiger oder runder Form und Breiten von 1 mm bis 10 mm.

Weitere Merkmale der Erfindung ergeben sich aus den Figuren, die nachfolgend beschreiben sind. Es zeigen:
- Fig. 1 a - 1c: das Spritzprägen des Grünlings von Keramikbremsscheiben,
- Fig. 2a - 2d: das Spritzpressen des Grünlings von Keramikbremsscheiben,
- Fig. 3: die Faserorientierung durch ein zentrales Einspritzen,
- Fig. 4: eine Keramikbremsscheibe mit einem speziellen Rippendesign, und
- Fig. 5 und 6: jeweils eine Keramikbremsscheibe mit speziellen Lüftungskanälen.

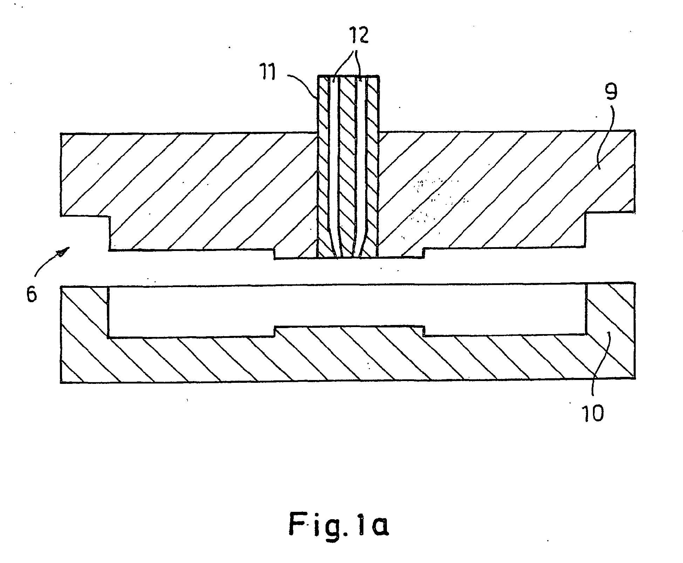

Die Fig. 1a bis 1c zeigen das Spritzprägen des Grünlings von Keramikbremsscheiben auf einer Spritzgießmaschine, die aus einem Oberteil 9 und einem Unterteil 10 besteht. Über eine zentral im Oberteil 9 angeordnete Düse 11, im gezeigten Fall mit zwei Einspritzkanälen 12, wird die erforderliche Menge BMC-Compound 2 in das geschlossene oder leicht geöffnete Werkzeug 6 eingespritzt. Anschließend wird das Werkzeug 6 geschlossen, d. h. das Oberteil 9 in Richtung Unterteil 10 verschoben und dabei das Compound 2 in die gewünschte Form gepresst bzw. geprägt. Das Unterteil 10 und das Oberteil 11 haben eine Form, die dem Design der gewünschten Keramikbremsscheibe entspricht.

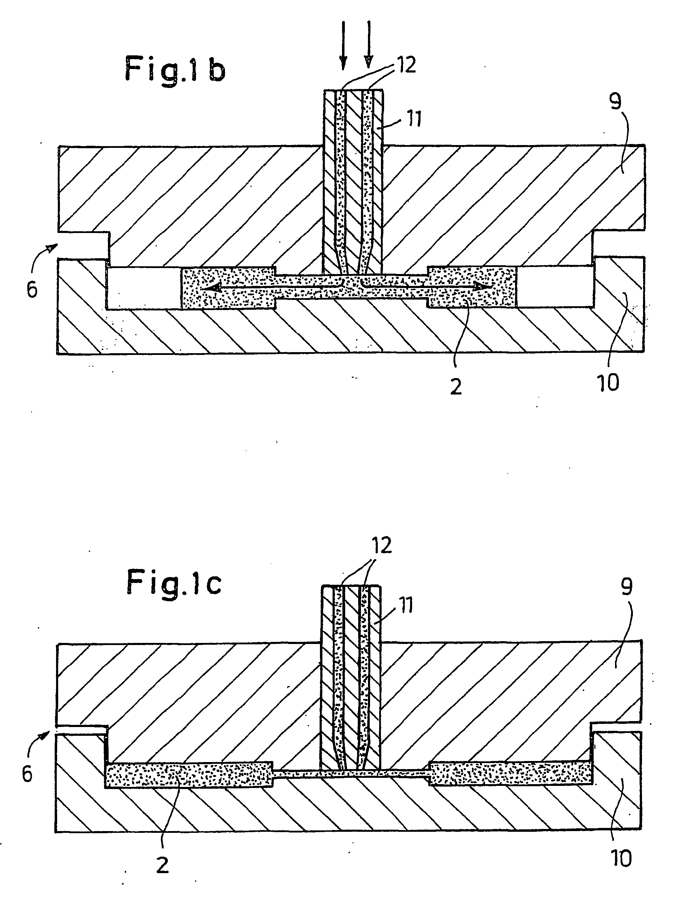

Fig. 1a zeigt das Werkzeug 6 im geöffneten Zustand vor dem Einspritzen des Compounds. Fig. 1b zeigt das Werkzeug 6 in leicht geöffnetem Zustand, d. h. das Oberteil 9 ist geringfügig vom Unterteil 10 abgehoben. In diesem Zustand wird das Compound 2 über die Düse 11 mit den Einspritzkanälen 12 eingespritzt. Die Temperatur des Werkzeugs 6 und der Druck sind an die Erfordernisse des Compounds 2 angepasst.

Fig. 1c zeigt das eigentliche Pressen bzw. Prägen, d. h. das Oberteil 9 wird in Richtung Unterteil 10 gefahren und so der Grünling gepresst bzw. geprägt. Anschließend wird das Werkzeug 6 geöffnet, der Grünling entnommen und der weiteren Bearbeitung wie Pyrolisation und Schmelzinfiltration zugeführt.

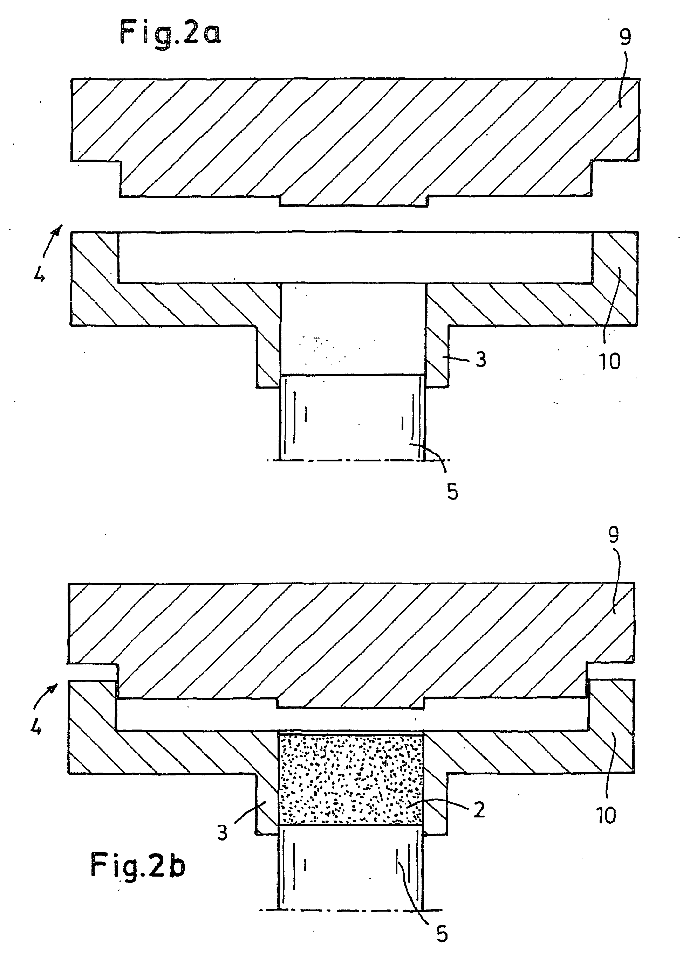

Die Fig. 2a bis 2d zeigen das Spritzpressen des Grünlings für Keramikbremsscheiben.

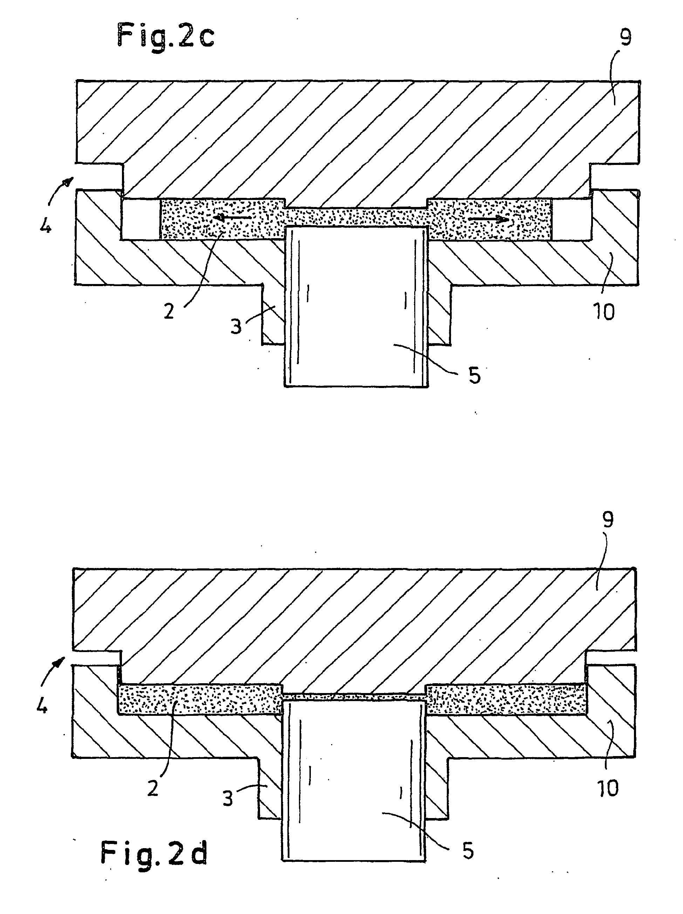

Fig. 2 a zeigt das Werkzeug 4 in weit geöffnetem Zustand, d. h. das Oberteil 9 ist weit vom Unterteil 10 abgehoben. In der Mitte des Werkzeugs 4, d. h. des Unterteils 10 ist ein Einspritzzylinder 3 angeordnet, der einen verschiebbaren Kolben 5 beinhaltet.

Fig. 2 b zeigt das Werkzeug 4 im teilgeschlossenen Zustand, wobei im Einspritzzylinder 3 auf dem Kolben 5 die erforderliche Menge Compound 2 angeordnet ist. Diese wird auf üblichem Wege eingefüllt bzw. auch eingespritzt. Der Kolben 5 ist in dieser Fig. im eingefahrenen Zustand gezeigt.

Fig. 2 c zeigt das Werkzeug 4 kurz vor der Fertigstellung des Grünlings. Der Kolben 5 befindet sich in nahezu ausgefahrener Stellung und das Compound 2 füllt schon nahezu die gesamte Form aus.

Fig. 2 d zeit das Werkzeug 4 nach dem Spritzpressvorgang. Das Werkzeug 4 ist jetzt vollständig geschlossen und der Koben 5 befindet sich in seiner Endstellung. Der Grünling ist geformt und kann nach dem Öffnen des Werkzeugs 4 entnommen werden.

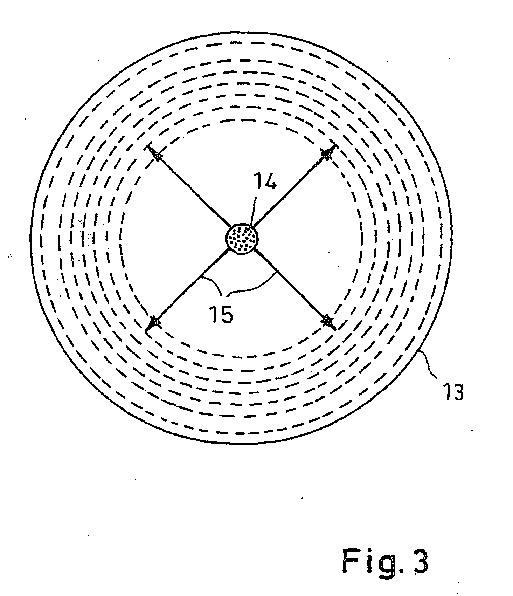

Fig. 3 zeigt in einem Schnitt durch einen Grünling 13 die Faserorientierung 15. Eine Vororientierung der Fasern erfolgt durch das zentrale Einspritzen über die Düse 14. Beim Schließen des Werkzeugs, wie oben beschrieben, erfolgt anschließend eine weitere Orientierung der Verstärkungsfasern in radialer Richtung.

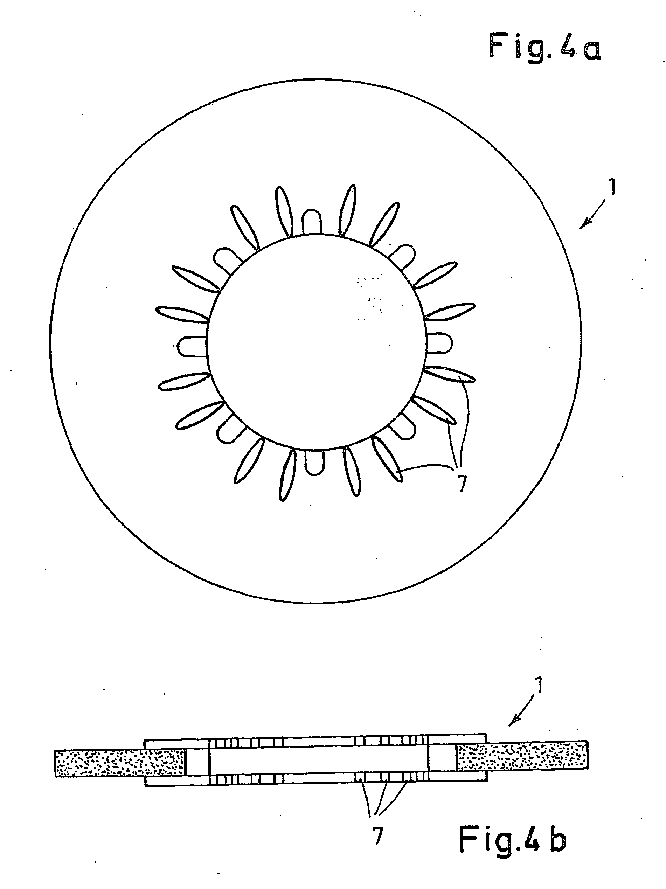

Fig. 4 zeigt eine fertige Keramikbremsscheibe 1 mit einem beidseitigen Rippendesign zur Kühlung der Scheibenoberfläche. Hierzu sind Lüftungsrippen 7 am Innendurchmesser angeordnet. In diesem speziellen Fall erstrecken sich die Lüftungsrippen 7 in radialer Richtung. Die Lüftungsrippen 7 sind in Umfangsrichtung gleichmäßig verteilt angeordnet.

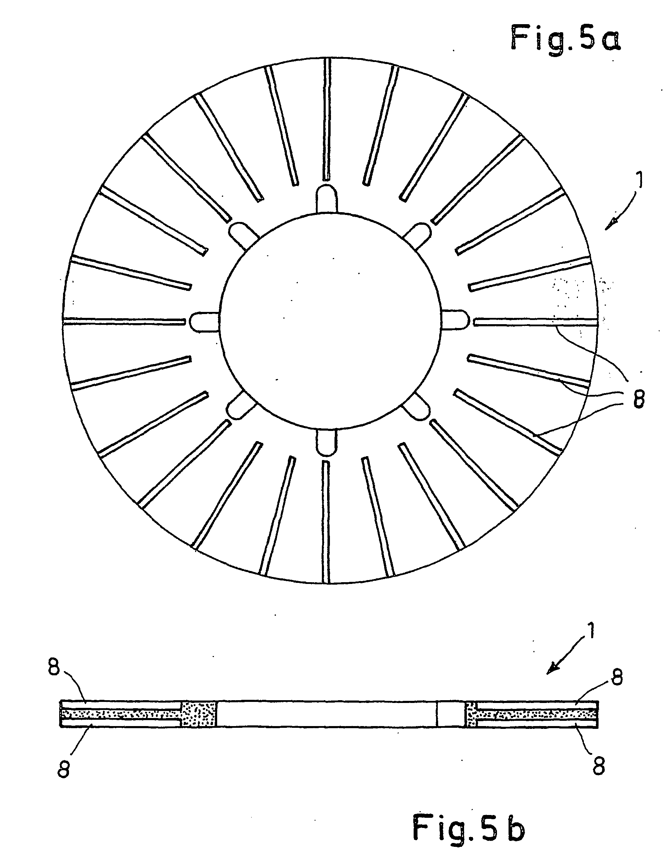

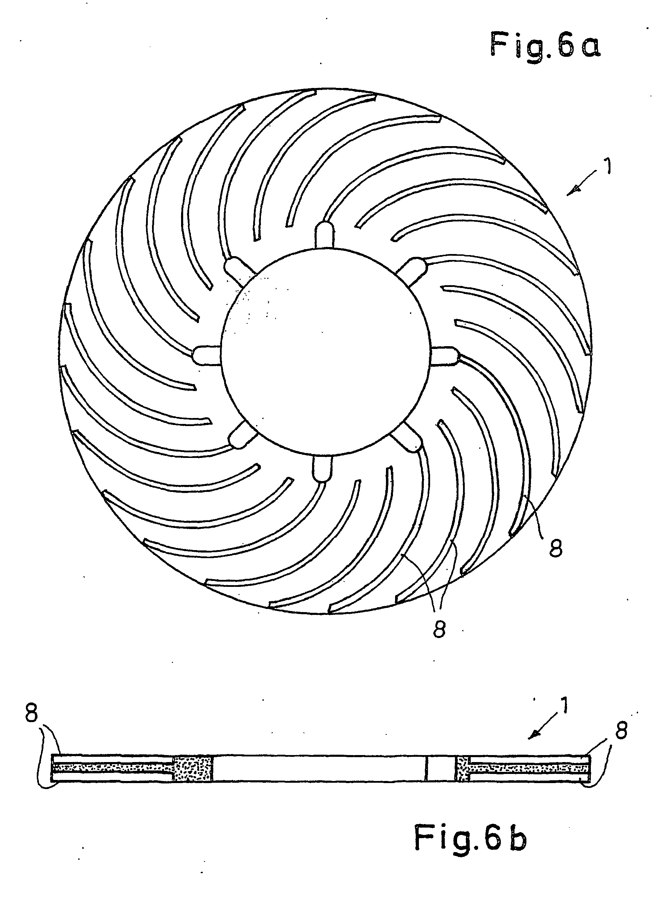

Die Fig. 5 und 6 zeigen Lüftungskanäle 8 auf beiden Seiten der Keramikbremsscheibe 1. In der Fig. 5 verlaufen diese Lüftungskanäle in radialer Erstreckung zur Oberfläche der Bremsscheibe und in der Fig. 6 in evolvendenförmiger Erstreckung. Diese Lüftungskanäle 8 sind durch schlitzförmige Einbuchtungen direkt beim Spritzpressen bzw. Spritzprägen des Grünlings geschaffen worden.

## Patentansprüche

1. Verfahren zur Herstellung von Keramikbremsscheiben (1) aus BMC, umfassend folgende Verfahrensschritte:
a) Herstellung eines BMC-Compound (2) mit einer Matrix aus Phenolharz und mit Verstärkungsfasern aus Kohlenstoff, wobei die Länge der Kohlenstofffasern zwischen 6 mm und 50 mm liegt,
b) Herstellung eines Grünlings der Keramikbremsscheiben aus dem BMC-Compound (2) im Spritzpress- oder im Spritzprägeverfahren,
c) Pyrolisieren des Grünlings zur Herstellung eines porösen Formkörpers und
d) Schmelzinfiltration des porösen Formkörpers mit einer Schmelze, vorzugsweise mit einer Siliziumschmelze, zur Herstellung eines Formkörpers mit reaktionsgebundenen Fasern.

2. Verfahren nach Anspruch 1, **dadurch gekennzeichnet, dass** sich im BMC-Compound (2) verschiedene Faserlängen befinden.

3. Verfahren nach Anspruch 1 oder 2, **dadurch gekennzeichnet, dass** der Faseranteil im Compound (2) zwischen 10 Volumenprozent und 60 Volumenprozent liegt.

4. Verfahren nach einem der Ansprüche 1 bis 3, **dadurch gekennzeichnet, dass** mehrere Compounds (2) mit unterschiedlichen Faserlängen gleichzeitig in das Spritzpress- bzw. Spritzprägewerkzeug eingebracht werden.

5. Verfahren nach einem der Ansprüche 1 bis 4, **dadurch gekennzeichnet, dass** beim Spritzpressverfahren in der Mitte des Werkzeugs (4) ein Einspritzzylinder (3) angeordnet ist, in dem die erforderliche Compoundmenge (2) eingebracht wird und durch Hubbewegung des Kolbens (5) im Einspritzzylinder (3) in das geöffnete Werkzeug (4) eingespritzt wird.

6. Verfahren nach einem der Ansprüche 1 bis 4, **dadurch gekennzeichnet, dass** das Spritzprägeverfahren auf einer Spritzgießmaschine erfolgt, die in der Druck- und Temperatureinstellung an das BMC-Compound (2) angepasst wurde, und das Compound (2) in das geschlossene oder leicht geöffnete Werkzeug (6) eingespritzt wird und anschließend das Werkzeug (6) geschlossen und dabei das Compound (2) in die gewünschte Form gepresst bzw. geprägt wird.

7. Verfahren nach einem der Ansprüche 1 bis 6, **dadurch gekennzeichnet, dass** die Keramikbremsscheiben (1) Lüftungsrippen (7) am Innendurchmesser auf beiden Seiten der Keramikbremsscheibe (1) aufweisen.

8. Verfahren nach einem der Ansprüche 1 bis 7, **dadurch gekennzeichnet, dass** auf beiden Seiten der Keramikbremsscheibe (1) an der Bremsscheibenoberfläche durchgehende Lüftungskanäle (8) in gerader, kreisförmiger oder evolvendenförmiger Anordnung zur Wärmeabführung angeordnet sind.

9. Verfahren nach Anspruch 8, **dadurch gekennzeichnet, dass** der Querschnitt der Lüftungskanäle (8) in eckiger oder runder Form und Breiten zwischen 1 mm und 10 mm liegt.

## Claims

1. A process for producing ceramic brake disks (1) from BMC, comprising the following process steps:
a) production of a BMC compound (2) with a matrix consisting of phenolic resin and with reinforcing fibres consisting of carbon, the length of the carbon fibres being between 6 mm and 50 mm,
b) production of a green compact of the ceramic brake disks from the BMC compound (2) using the transfer-moulding process or injection/compression process,
c) pyrolysing the green compact for the purpose of producing a porous moulded article and
d) melt infiltration of the porous moulded article with a melt, preferably with a silicon melt, for the purpose of producing a moulded article with reaction-bonded fibres.

2. A process according to Claim 1, **characterised in that** different lengths of fibre are found in the BMC compound (2).

3. A process according to Claim 1 or 2, **characterised in that** the proportion of fibre in the compound (2) amounts to between 10 per cent by volume and 60 per cent by volume.

4. A process according to one of Claims 1 to 3, **characterised in that** several compounds (2) with varying lengths of fibre are introduced simultaneously into the transfer-moulding tool or injection/compression-moulding tool.

5. A process according to one of Claims 1 to 4, **characterised in that** in the case of the transfer-moulding process there is arranged in the middle of the tool (4) an injection cylinder (3) in which the requisite quantity of compound (2) is introduced and injected into the open tool (4) by reciprocating motion of the piston (5) in the injection cylinder (3).

6. A process according to one of Claims 1 to 4, **characterised in that** the injection/compression-moulding process is undertaken in an injection-moulding machine which has been adapted to the BMC compound (2) in its pressure and temperature settings, and the compound (2) is injected into the closed or slightly open tool (6) and subsequently the tool (6) is closed and in the process the compound (2) is pressed or compression-moulded into the desired shape.

7. A process according to one of Claims 1 to 6, **characterised in that** the ceramic brake disks (1) exhibit ventilation fins (7) on the inside diameter on both sides of the ceramic brake disk (1).

8. A process according to one of Claims 1 to 7, **characterised in that** uninterrupted ventilation ducts (8) in straight, circular or involute arrangement are disposed on both sides of the ceramic brake disk (1) on the surface of the brake disk for the purpose of dissipating heat.

9. A process according to Claim 8, **characterised in that** the cross-section of the ventilation ducts (8) is in angular or round form, and widths amount to between 1 mm and 10 mm.

## Revendications

1. Procédé de fabrication de disques de frein (1) en céramique à partir de composite BMC, comprenant les étapes suivantes :
a) préparation d'un composite BMC (2) comprenant une matrice en résine phénolique et des fibres de renfort en carbone, longues de 6 à 50 mm ;
b) fabrication d'une ébauche crue de disque de frein en céramique, à partir du composite BMC, en une opération de moulage par injection ou d'estampage par injection ;
c) pyrolyse de l'ébauche crue, pour en faire un corps façonné poreux,
d) et infiltration, dans le corps façonné poreux, d'une masse fondue, qui est de préférence une masse fondue de silicium, pour obtenir un corps façonné poreux comportant des fibres liées par réaction.

2. Procédé conforme à la revendication 1, **caractérisé en ce qu'**il y a, dans le composite BMC (2), des fibres de différentes longueurs.

3. Procédé conforme à la revendication 1 ou 2, **caractérisé en ce que** la proportion volumique de fibres dans le composite (2) vaut de 10 à 60 %.

4. Procédé conforme à l'une des revendications 1 à 3, **caractérisé en ce qu'**on introduit en même temps, dans l'outil de moulage par injection ou d'estampage par injection, plusieurs composites (2) contenant des fibres de différentes longueurs.

5. Procédé conforme à l'une des revendications 1 à 4, **caractérisé en ce que**, pour l'opération de moulage par injection, il y a au milieu de l'outil (4) un cylindre d'injection (3) dans lequel on introduit la quantité nécessaire de composite (2), que l'on moule en l'injectant dans l'outil (4) ouvert, au moyen d'un piston (5) qu'on pousse dans le cylindre d'injection (3).

6. Procédé conforme à l'une des revendications 1 à 4, **caractérisé en ce qu'**on réalise l'opération d'estampage par injection dans une machine de moulage par injection où les réglages de température et de pression ont été adaptés au composite BMC (2), et **en ce qu'**on injecte le composite (2) dans l'outil (6) fermé ou légèrement ouvert, on ferme ensuite l'outil (6) et l'on y estampe ou presse le composite (2) pour lui donner la forme voulue.

7. Procédé conforme à l'une des revendications 1 à 6, **caractérisé en ce que** le disque de frein (1) en céramique présente, sur ses deux faces, des cannelures de ventilation (7) au niveau du diamètre interne.

8. Procédé conforme à l'une des revendications 1 à 7, **caractérisé en ce qu'**il y a sur les deux faces du disque de frein (1) en céramique, pour évacuer la chaleur, des canaux de ventilation (8), de forme rectiligne, circulaire ou développée, qui parcourent toute la surface du disque de frein.

9. Procédé conforme à la revendication 8, **caractérisé en ce que** les canaux de ventilation (8) ont une section transversale de forme anguleuse ou arrondie, et sont larges de 1 à 10 mm.
